# EUROPEAN PATENT SPECIFICATION

(11) **EP 2 271 727 B1**
(45) Date of publication and mention of the grant of the patent: **14.01.2015**
(21) Application number: 09725846.1
(22) Date of filing: 24.03.2009
(51) Int. Cl.: C09K 11/79, G21K 4/00

(54) **DOPED RARE EARTHS ORTHOSILICATES USED AS OPTICAL DEVICES FOR RECORDING INFORMATION**
SELTENERDDOTIERTE ORTHOSILICATE ALS OPTISCHE VORRICHTUNGEN ZUR AUFNAHME VON INFORMATIONEN
ORTHOSILICATES DOPÉS AUX TERRES RARES UTILISÉS COMME DISPOSITIFS OPTIQUES POUR L'ENREGISTREMENT D'INFORMATIONS

(30) Priority: 26.03.2008 IT CA20080008
(43) Date of publication of application: 12.01.2011
(73) Proprietor: UNIVERSITA DEGLI STUDI DI CAGLIARI, 09124 Cagliari (IT)
(72) Inventor: ANEDDA, Alberto, I-09045 Quartu Sant'Elena (IT); RICCI, Pier Carlo, I-09126 Cagliari (IT); CHIRIU, Daniele, I-09013 Carbonia (IT)
(74) Representative: Barbaro, Gaetano
(86) International application number: PCT/EP2009/053461
(87) International publication number: WO 2009/118317

(56) References cited:
- US-A- 5 003 181
- MEIJERINK A ET AL: "Photostimulated luminescence and thermally stimulated luminescence of Y2SiO5-Ce, Sm" JOURNAL OF PHYSICS D. APPLIED PHYSICS, IOP PUBLISHING, BRISTOL, GB, vol. 24, no. 6, 14 June 1991 (1991-06-14), pages 997-1002, XP020013692 ISSN: 0022-3727
- KAPPERS L A ET AL: "Thermal quenching and electron traps in LSO" JOURNAL OF LUMINESCENCE, AMSTERDAM, NL, vol. 102-103, 1 May 2003 (2003-05-01), pages 162-165, XP004416622 ISSN: 0022-2313
- R. VISSER, C.L. MELCHER, J.S. SCHWEITZER: "Photostimulated Luminescence and Thermoluminescence of LSO Scintillators" IEEE TRANSACTIONS ON NUCLEAR SCIENCE, vol. 41, no. 4, August 1994 (1994-08), pages 689-693, XP002549158
- JACOBSOHN ET AL: "The central role of oxygen on H<+>-irradiated Lu2SiO5 luminescence" JOURNAL OF LUMINESCENCE, AMSTERDAM, NL, vol. 124, no. 1, 22 November 2006 (2006-11-22), pages 173-177, XP005776447 ISSN: 0022-2313

## Description

The present invention relates to a new method for storing and retrieving information by means of doped rare earths orthosilicates as well to systems and devices employing such method.

Optical recording media, reliably storing the recorded information and coupled with an easy way to read and retrieve such information may find use in a wide range of different applications, among the most interesting ones there being electronic circuitry design, optical memories, dosimetry and radiographic imaging.

Doped rare earths orthosilicates are a class of optical materials that is typically exploited by virtue of their fast response time, in fact after being exposed to a suitable excitation radiation they quickly re-emit lights after a very short time, typically in the range of few tens of nanoseconds and up to few milliseconds. For this reason they are employed in applications such as part of the sensing system in ionizing radiations detection.

One of the most recent and important uses of these types of crystals is in the medical diagnostic field, for example in computer tomography, as described in US patent 7403589, where it is highlighted the desired effect of an extremely fast response time, preferably less than 50 ns.

These materials are typically referred to in the technical field as scintillators, and the main research lines are devoted in improving their characteristics for applications where they are the constituting part of radiation detecting systems, more specifically both in improving the response efficiency and in reducing the scintillator response time, since in these applications the higher the lag time between the ionizing radiation absorption and the crystal light re-emission, the worse.

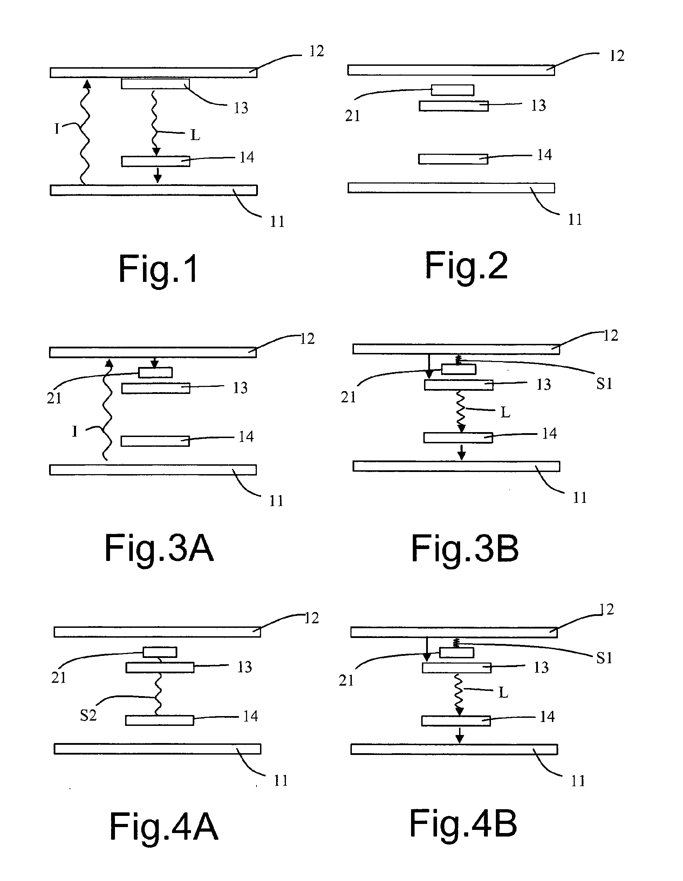

The mechanism governing the behavior of an ideal scintillator is depicted in figure 1, where the valence band is indicated with 11, the conduction band with 12, the two most representative levels of the rare earth dopant are indicated with 13 and 14. Upon the absorption of an ionizing radiation I, an electron jumps from the valence band of the scintillating crystal to its conduction band, then in about 40 ns goes back to the valence band emitting some light in the process. The passage from the conduction to the valence band occurs via a transition to the upper energetic level of the rare earth 13 (enabled by the close energetic proximity of such level with the conduction level), the jump from the upper energetic to the lower energetic level of the rare earth 14 and the consequent emission of the radiation L of wavelength determined by the energy level distribution, and finally the transition to the valence level.

The presence of impurities or defects in the crystal structure may create "traps", i.e. additional active energy levels that interfere with the above depicted scheme, resulting in a non-ideal behavior, since such traps may cause loss of radiation, resulting in a less efficient crystal, or delays in its response. Such delays are detrimental for the use as scintillators, since they may also cause "false" or non controlled responses when these are used in detection systems where the main function and purpose of these scintillating crystals is to "shift" the incoming radiation wavelength to a different and more easily detectable wavelength, for example emitting visible light.

It is to be remarked that the definition of traps sometimes has a slight different definition in the technical field and typically is limited only to stoichiometric defects linked to ion vacancies within the crystal structure.

The article of A. Meijerink et al., "Photostimulated luminescence and thermally stimulated luminescence of Y2SiO5-Ce,Sm, Journal of Physics D. Applied Physics, IOP Publishing, Bristol, GB, vol. 24, no.6, 14 June 1991, pages 997-1002, upon the disclosure of which the preamble of the independent claims is drafted, discloses Y2SiO5:Ce,Sm obtained by firing raw materials in a nitrogen atmosphere.

The patent US 5,003,181 discloses a method for recording and reproducing a radiation image using a photostimulable phosphor selected within the group of rare earth orthosilicates activated with a first activator comprising cerium and/or terbium and a second activator comprising zirconium and/or samarium, wherein rare earth is one of yttrium, yttrium and lutetium, and yttrium, lutetium and gadolinium.

The inventors during their research activity have found that some of these crystals possessed some of the above outlined detrimental characteristic that rendered them unsuitable as scintillators, since the absorbed radiation was not immediately released but there was a certain delay between the radiation absorption and the crystal luminous emission.

Upon further investigation and research work the inventors have found how to control and predict the result of the interaction of these defective crystals with high energy radiation, thus coming to conceive the present invention, that in a first aspect thereof refers to a new method for information storage and retrieval as defined in claim 1 employing as storing element doped rare earth orthosilicates that present a trap density comprised between 10¹⁵ and 10²⁰ traps/cm³.

The invention will be further described with reference to the drawings in which:
- Figure 1 shows the energetic level and functional scheme of an ideal scintillator crystal;
- Figure 2 shows the energetic level scheme of a crystal suitable to carry out the method of the present invention;
- Figures 3A and 3B show a first functional scheme for storing and reading the information according to the present invention;
- Figures 4A and 4B show a first functional scheme for storing and reading the information according to the present invention;
- Figure 5 shows a comparison of thermoluminescence spectra of crystal grown in air and in Argon;
- Figure 6 shows a comparison of thermoluminescence spectra obtained with different material apt for carrying out the invention;
- Figure 7A shows a radiographic image recorded and read with the method of the present invention, the essential elements of such image being schematically represented in Figure 7B; and
- Figure 8 shows a comparison among the radiation stopping power of crystals useful to carry out the method of the invention, the human skin and another optically active material.

Figure 1 has been already described with regard to the explanation of the energy scheme level of a scintillator crystal. It is to be underlined that the depicted energy levels in this and the following figures, have sole a representative function and are in no way an indication of the true or relative value of such levels. In particular the energetic level of the traps in figures 2-4 is much closer to the energy of the conduction band, and if depicted correctly those would result almost superimposed, leading to a representation that although more correct from a scientific standpoint, would be quite difficult to understand.

The inventors have found that if the doped rare earth orthosilicate crystal has a certain density of defects then it is able to store information recorded by means of an external radiation source, information that can be read later after a suitable external excitation is provided. The preferred way to release or read the stored information is by impinging laser radiation on the rare earth orthosilicate crystal.

An energetic scheme of an orthosilicate useful to carry our the invention is depicted in figure 2, where the trapping element energy has been depicted as 21.

A first recording scheme is shown in figure 3A: in this case a high energy radiation, i.e. an external source with an energy higher with respect to the gap between the conduction and the valence band, causes an electron transition between said bands. Some light will be quickly re-emitted according to the usual scintillator behavior, but some electron will be captured in the energetic level 21, actually "writing" the crystal, storing an information with regard to the exposure to the incoming high energy radiation.

The reading process is shown in figure 3B, and envisions the use of external means for exciting the electrons stored in the trap to move them into valence band 12 and cause the light emission according to the usual scintillator mechanism.

Such external exciting means may be provided by a light source, typically a low power laser, or may be thermal means or, in a less common embodiment, a combination thereof.

The recording and reading process shown in figures 3A and 3B are particularly useful in medical applications, with particular reference to dosimetry and radiographic imaging.

An alternate recording mechanism is depicted in figure 4A: in this case the writing source has an energy not less than the gap between the lowest dopant energy level and the highest trap energy level. The reading mechanism is similar to the one previously described with reference to figure 3B.

This second method for writing information into the crystal is preferred for the optical memory and electronic circuit design.

As it is possible to understand from the above reference figures describing the optical material crystal writing and reading mechanism according to the present invention, the density of traps, also referable as defects, within the crystal structure represents the key point for the successful use of such material.

In particular the inventors have found that the trap density shall be comprised between 10¹⁵ and 10²⁰ traps/cm³, but improved performances are achieved with a trap concentration comprised between 10¹⁶ and 10¹⁹ traps/cm³ and even more preferably between 2*10¹⁸ and 9*10¹⁸ traps/cm³.

In particular the two narrowest intervals specified are the ones optimizing the density defect density for information storage, without a significant re-capture of electrons during the reading mechanism, that would result in non-optimal performances and drawbacks.

In this regard the best results are achieved with a trap density comprised between 2*10¹⁸ and 9*10¹⁸ traps/cm³.

Preferred doped rare earths orthosilicates to carry out the invention are Lu₂SiO₅ (hereinafter shortly indicated under the acronym LSO), Y₂SiO₅ (hereinafter shortly indicated under the acronym YSO) and Lu₂₋ₓYₓSiO₅ with x comprised between 0 and 2 (hereinafter shortly indicated under the acronym LYSO), doped with one or more rare earths chosen among: Ce, Pr, Nd, Sm, Eu, Gd, Tb, Dy, Ho, Er, Tm and Yb.

The inventors have found that some crystals possessing enhanced characteristics for the use in the applications under considerations have as main rare earth dopant Ce, Tb or their combination, while the secondary rare earth dopant is chosen between Pr, Nd, Sm, Eu, Gd, Dy, Ho, Er, Tm Yb and their combinations.

With main dopant it is intended the doping rare earth element or rare earth combination (as previously described Ce, Tb or Ce+Tb), with concentration being higher, even slightly, with respect to the presence of the secondary dopant or dopants combination.

The main dopant concentration level is, preferably, between 700 ppm and 5000 ppm (parts per million) and preferably comprised in the range between 3500 and 4500 ppm.

The inventors have also found that there are two different mechanisms that may lead to the formation of reproducible and sufficient intra-gap energy levels, acting as recombination centers, within the crystal. In the first one at least a second rare earth dopant is intentionally added, such second dopant having a much more stable transition between its upper energetic level and its lower energetic level, thus creating sites for the storage of information.

In this case it is important to have a secondary rare earth dopant or concentrations comprised between 100 and 5000 ppm, notwithstanding the previously expressed condition on the preferred nature and relationship between the main and secondary dopants. In case the secondary dopants consist of a mix of rare earths, then the previous condition is intended to be that the sum of all the secondary dopants has to be less than the amount of the main dopants.

The inventors have also found that the trap formation mechanism can be enhanced by means of growing the crystals in oxygen-poor atmosphere, or a suitable reducing atmosphere. A preferred solution in this case envisions the use of inert gases such as nitrogen or argon.

Also in this case useful crystals to carry out the invention are the following doped rare earths orthosilicates: Lu₂SiO₅ (hereinafter shortly indicated under the acronym LSO), Y₂SiO₅ (hereinafter shortly indicated under the acronym YSO) and Lu₂₋ₓYₓSiO₅ (with x comprised between 0 and 2) (hereinafter shortly indicated under the acronym LYSO), doped with one or more rare earths chosen among: Ce, Pr, Nd, Sm, Eu, Gd, Tb, Dy, Ho, Er, Tm and Yb.

When this mechanism of enhanced trap formation is used, it is possible to have a lower concentration for the secondary rare earth dopant, theoretically such secondary dopant may also be non present, since also in this case the paramount parameter for the use of rare earth doped orthosilicates is the density of the trap within the crystal, that as previously described may be achieved by means of rare earth co-doping, crystal growth in an oxygen poor atmosphere, or also by means of a combination of these mechanisms.

In the course of their studies, the inventors have also found a very convenient method to characterize the behavior of the crystal, such method allowing to understand and predict the suitability of the material as an efficient information recording media without the need of a complex chemical characterization of the crystal itself.

This method relies on the thermoluminescence characterization of the material after its exposure to a high energy source, such as X ray for a suitable amount of time, typically few minutes, followed by a well timed temperature scanning and a recording of the luminous emission of the irradiated sample.

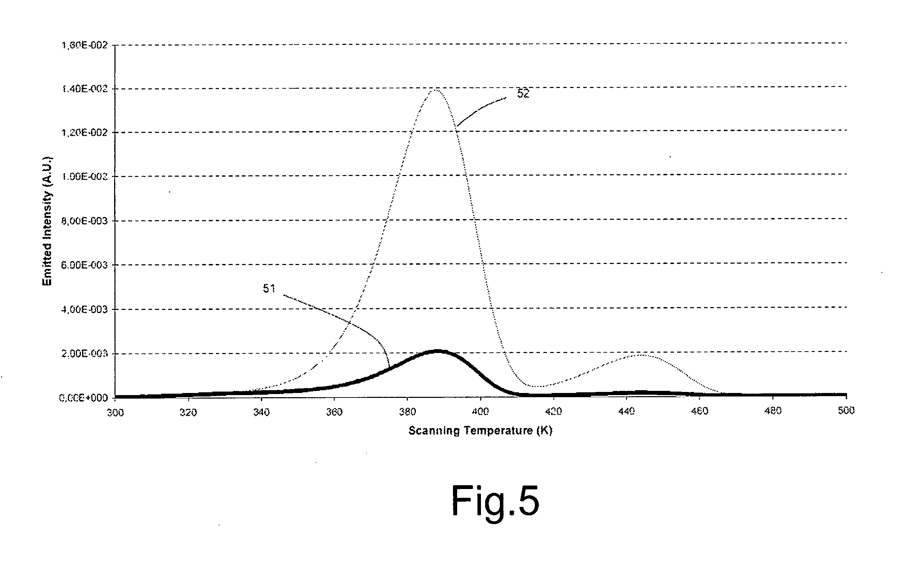

In particular figure 5 shows a comparison of two thermoluminescence (TL) characterization curves of a YSO crystal grown in air (standard YSO), represented with thick line 51, and the same crystal grown in argon, represented with thinner line 52. The traps concentration was 1,5*10¹⁶ traps/cm³ for the first, and 9*10¹⁶ traps/cm³ for the argon grown crystal.

These curves have been obtained by irradiating the crystal samples with a X-ray source for 2 minutes, reading after 30 seconds the samples, and the thermoluminescence curves collected according to the well established experimental procedure for TL measurements.

It is clearly possible to observe that the thermoluminescence curve for the YSO crystal grown in Argon is much higher and also a numerical analysis integrating the areas gives a ratio of 6 between the thermoluminescence of YSO grown in argon and the one of standard YSO.

The use of co-doped rare earth orthosilicates for storage of information is not new and has been described in the pioneering patent US 5,003,181. However this patent, focused on co-doped crystal containing Gadolinium, did not disclose or teach the importance of the trap phenomena and the importance of the correct density of such traps within the crystal structure in order to have efficient and reliable data recording.

On the other hand US patent 6,846,434 discloses the use of a different material, Al₂O₃, requiring the concurrent presence of a different type of dopant, magnesium, and oxygen vacancies defects for optical data storage.

Therefore the enabling condition, or in some cases conditions, causing materials to become suitable for being used as means for recording information are different and require tailored studies and developments, like in the case of the use of Al₂O₃ as described in US 6,846,434 and the material disclosed in the present invention.

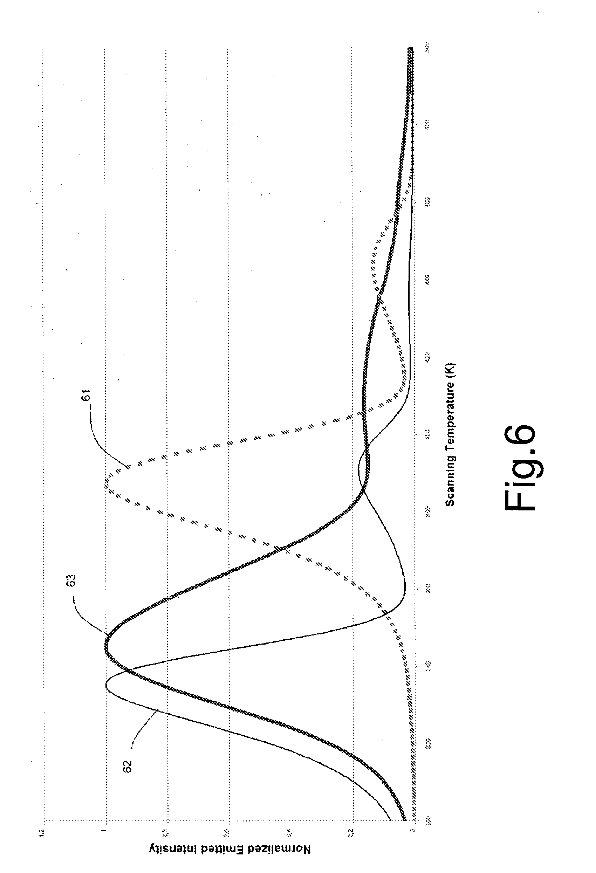

In figure 6 there is shown a thermoluminescence characterization comparison of three crystals suitable for embodying the present invention; in particular curve 61 is referred to a YSO crystal with trap concentration of 8,5*10¹⁶ traps/cm³, curve 62 to a LSO crystal with trap concentration of 9,79*10¹⁶ traps/cm³, and finally curve 63 to a LYSO crystal with trap concentration of 8,4*10¹⁸ traps/cm³.

These curves were obtained with the same experimental set-up and procedure already described with reference to the results shown in figure 5.

It is possible to observe from Figure 6 that YSO crystals possess enhanced characteristics that render them particularly suitable for being used as information storage media; in particular they release the stored information at higher temperatures, rendering the systems using these crystals for information storage and retrieval less insensitive to temperature fluctuations.

The information storage and retrieval may be applied in different technical fields, among the most interesting of which there are the electronic circuitry design and optical memories, the dosimetry and the radiographic imaging. Each of these specific fields, even if using the common concept for data storage outlined in claim 1, shows different aspects in terms of optimal trap density and recording and reading mechanism.

In particular in the optical memories application the information is preferentially stored and read by means of laser sources, preferably by means of laser diodes. Preferentially for data recording poli- and/or monochromatic sources are employed in the spectral range comprised between 5 MeV and 3 eV, while data reading, display and erase may be carried out with poli- and/or monochromatic sources in the spectral range comprised between 2.5 eV and 1.0 eV. Obviously the reading operation causes the display/retrieval of the stored data and at the same time erases the optical memory. It is to be remarked that the estimated potential residence time of the information within an optical memory realized according to the present invention is up to 10¹⁰ hours.

An alternative way to read and empty the optical memory, although less preferred, is via thermal excitation.

Another application benefiting from the information recording method of the present invention is the manufacturing of new components for electronic circuits suitable for selectively guiding an electrical signal along tracks recorded by means of optical excitation. This feature allows to use in a dynamic and cheap way the same sample for the manufacturing of different circuits.

In this specific application the high density of the crystalline matrix of the trapping defects, that does not allow the spatial diffusion of the charge carriers, is also exploited to its best, while allowing the transport of the charge only in the illuminated areas of the sample. A subsequent optical excitation of the circuit, i.e. the crystal after its exposition to incident radiation allows to delete the stored track or to dynamically modify the same.

Also in this case the recording mechanism of the conductive tracks occurs through luminous excitation with poli- and/or monochromatic sources having energies comprised in the spectral range between 5 MeV and 3 eV, whereas the partial or complete cancellation of such recorded tracks is carried out with optical excitation methods in the spectral range between 2.5 eV and 1.5 eV or in a less preferred embodiments by means of thermal methods.

The process may be repeated many times after a crystal has been emptied of the recorded information.

This very same concept can be used also in radiography: in this case the crystal will store the information coming from X-rays emerging from the radiographed sample, such radiographic image stored within the crystal may be read at a later stage allowing also the recording in digital format.

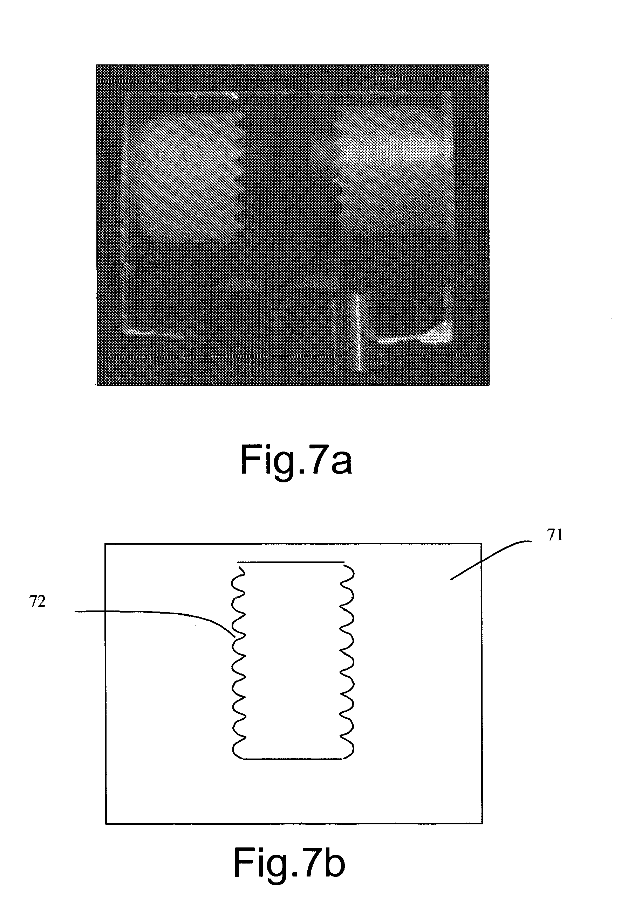

Fig. 7A shows a radiographic image of a screw of the type 307A SBY, obtained exposing a 4 mm thick crystal of Ce:LYSO with a cerium content of 1000 ppm to a 20 KeV X-ray radiation for 2 minutes, and reading the stored information by means of a He-Ne laser emitting radiation at 632 nm with an intensity of 1 mW/cm².

In order to overcome possible reading problems with the format of such image, a drawing showing its most representative elements is shown in figure 7B, where 71 represents the rare earth orthosilicate crystal used for storing and retrieving the image, 72 the read image from a recording camera (not shown) optically filtered in order to "cut" the scattered laser radiation (not shown).

This example shows that the information handling method of the invention may be applied onto the generic field of digital radiography, even though its preferred application is within the medical diagnostic field.

The method for recording information object of the present invention may be also used in dosimetry, These materials in fact are effective instruments to evaluate the radiation dose accumulated by persons working in environments exposed to ionizing radiations on a time basis that can vary from 24 hours to months according to the average trapping time of the active defect.

This information storage method applied to dosimetry offers advantages against the commercially available devices for environmental detection of ionizing energies that are based on reading systems through thermoluminescence measurement, since those devices requires specific and expensive apparatuses and above all long periods in order to collect information. Therefore, non-conventional materials are sought for this type of dosimeters, so that the process of reading the accumulated dose occurs through quicker and simpler measurements from the instrumental point of view.

At present, the most common optical reading devices for environmental detection of ionizing energies are based on Al₂O₃ crystals doped with carbon. However, the effective low atomic number of the constituting elements (low stopping power) results in a reduced efficiency of these devices, thus not facilitating their use in most applications.

In the materials used to carry out the invention, the effective high atomic number of the constituting elements and the procedures for counting the charges trapped in the defects of the crystalline matrix upon exposure to ionizing radiations (optical or thermal de-excitation with poli- and/or mono-chromatic sources with subsequent registration of the light emitted from the system) allow to overcome the limits of the presently available devices. Moreover the stopping power for the incoming radiation causes these materials to be more sensitive for radiation capture with particular reference to low energy radiations, such as X-rays, rendering the use of these materials for digital radiography extremely interesting also in view of the possibility of reducing the doses for the patients in case of medical diagnostic purposes.

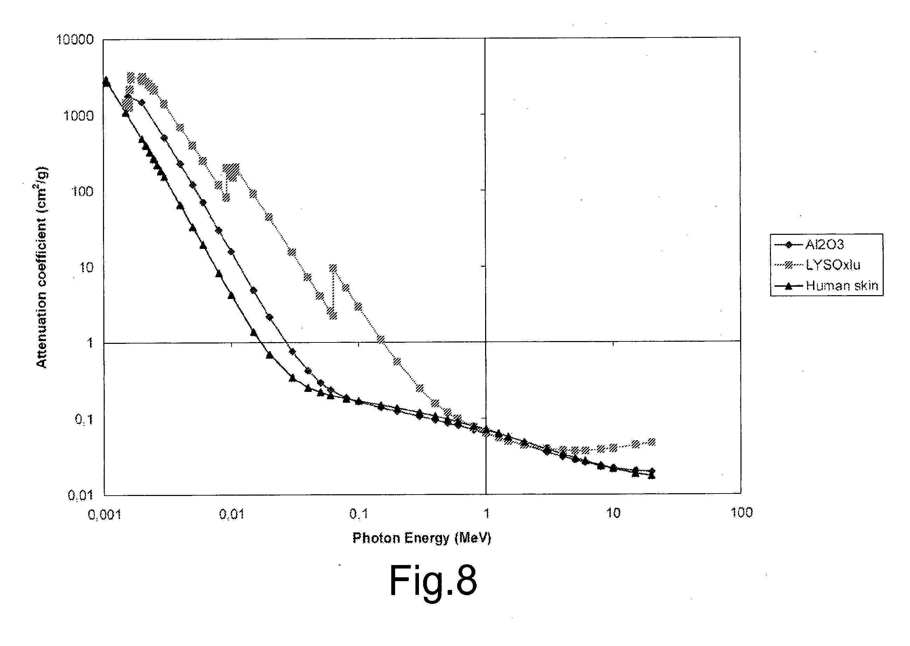

This feature and its characteristics are shown in figure 8 where the comparison of the stopping power expressed in cm²/g and crystals, as a function of the energy of the incoming photon is shown. Curve 81 represent the data for human skin, curve 82 Al₂O₃ and curve 83 LYSO.

Consequently, with the above materials the effective high atomic number of the constituting elements and the procedures for counting the charges trapped in the defects of the crystalline matrix (upon exposure to ionizing radiations and subsequent data reading by means of optical de-excitation with poli- and/or mono-chromatic sources, with subsequent registration of the light emitted from the system) allow to overcome the limits of the presently available devices.

In a second aspect thereof the object of the invention consists in providing devices for information storage and retrieval employing as storing element doped rare earth orthosilicates, characterized in that said doped rare earth orthosilicates show a trap density comprised between 10¹⁵ and 10²⁰ traps/cm³.

Useful examples of devices that benefit from this information storage and retrieval mechanism are optical memories and systems for electronic circuit design.

Devices of particular interest in the medical field are dosimeters and radiographic storage support and their correspondent reading systems, even though the radiographic recording method according to the present invention may find application also in industrial diagnostic tools.

## Claims

1. Method of storing and retrieving information comprising the step of using as storing element doped rare earth orthosilicates, said doped rare earth orthosilicates being selected from Lu₂SiO₅, Y₂SiO₅ and Lu₂₋ₓYₓSiO₅, having as main rare earth dopant Ce or Tb or their combination and containing at least a secondary rare earth dopant selected from Pr, Nd, Sm, Eu, Gd, Dy, Ho, Er, Tm Yb, **characterized in that** said doped rare earth orthosilicates:
show a trap density comprised between 10¹⁵ and 10²⁰ traps/cm³,
have said main rare earth dopant with a concentration comprised between 700 ppm and 5000 ppm,
the overall concentration of the secondary rare earth dopant or dopants is lower than the concentration of the main rare earth dopant and is comprised between 100 and 5000 ppm.

2. Method according to claim 1, wherein the trap density is between 10¹⁶ and 10¹⁹ traps/cm³.

3. Method according to claim 1, wherein the trap density is between 2·10¹⁸ and 9·10¹⁸ traps/cm³.

4. Method according to claim 1, wherein said main rare earth dopant concentration is comprised between 3500 and 4500 ppm.

5. Method according to claim 1, wherein said rare earth doped orthosilicate crystal is grown in a reducing atmosphere.

6. Method according to claim 5, wherein said rare earth doped orthosilicate is grown in argon or nitrogen.

7. Device for information storage and retrieval comprising as storing element doped rare earth orthosilicates selected from Lu₂SiO₅, Y₂SiO₅ and Lu₂₋ₓYₓSiO₅, having as main rare earth dopant Ce or Tb or their combination and containing at least a secondary rare earth dopant selected from Pr, Nd, Sm, Eu, Gd, Dy, Ho, Er, Tm Yb, **characterized in that** said doped rare earth orthosilicates:
show a trap density comprised between 10¹⁵ and 10²⁰ traps/cm³,
have said main rare earth dopant with a concentration comprised between 700 ppm and 5000 ppm,
the overall concentration of the secondary rare earth dopant or dopants is lower than the concentration of the main rare earth dopant and is comprised between 100 and 5000 ppm.

8. Information storage and retrieval device according to claim 7, wherein said device is an optical memory.

9. Information storage and retrieval device according to claim 7, wherein said device is an electronic circuit manufacturing system.

10. Information storage and retrieval device according to claim 7, wherein said device is a radiographic imaging system.

11. Information storage and retrieval device according to claim 7, wherein said device is a medical radiographic imaging system.

12. Information storage and retrieval device according to claim 7, wherein said device is a radiation dosimeter.

13. Information storage and retrieval device according to claims 7-9, wherein the information is stored by means of ionizing radiation of poly- and/or monochromatic sources with energies comprised between 5 Mev and 3 eV.

14. Information storage and retrieval device according to one of claims 7-11, wherein the stored information is retrieved by means of optical excitation methods with sources having energies comprised between 2.5 and 1.5 eV.

15. Information storage and retrieval device according to one of claims 7-11, wherein the stored information is retrieved by means of thermal de-excitation.

## Patentansprüche

1. Verfahren zum Speichern und Wiedergewinnen von Information, umfassend den Schritt der Verwendung von mit seltenen Erden dotierten Orthosilikaten als Speicherelement, wobei die besagten mit seltenen Erden dotierten Orthosilikate ausgewählt sind aus Lu₂SiO₅, Y₂SiO₅ und Lu₂₋ₓYₓSiO₅, mit Ce oder Tb oder deren Kombination als primärem Seltenerd-Dotiermittel, und mit wenigstens einem sekundären Seltenerd-Dotiermittel, ausgewählt aus Pr, Nd, Sm, Eu, Gd, Dy, Ho, Er, Tm Yb, **dadurch gekennzeichnet, dass** die besagten, mit seltenen Erden dotierten Orthosilikate:
- eine Störstellendichte zwischen 10¹⁵ und 10²⁰ Störstellen/cm³ aufweisen,
- das besagte, primäre Seltenerd-Dotiermittel in einer Konzentration zwischen 700 ppm und 5000 ppm aufweisen,
- wobei die Gesamtkonzentration des sekundären Seltenerd-Dotiermittels oder der sekundären Seltenerd-Dotiermittel niedriger ist als die Konzentration des primären Seltenerd-Dotiermittels und zwischen 100 und 5000 ppm liegt.

2. Verfahren nach Anspruch 1, wobei die Störstellendichte zwischen 10¹⁶ und 10¹⁹ Störstellen/cm³ liegt.

3. Verfahren nach Anspruch 1, wobei Störstellendichte zwischen 2*10¹⁸ und 9* 10¹⁸ Störstellen/cm³ liegt.

4. Verfahren nach Anspruch 1, wobei die Konzentration des primären Seltenerd-Dotiermittels zwischen 3500 und 4500 ppm liegt..

5. Verfahren nach Anspruch 1, wobei der Kristall aus mit Seltenen Erden dotiertem Orthosilikat unter einer reduzierenden Atmosphäre gezüchtet wird.

6. Verfahren nach Anspruch 5, wobei der Kristall aus mit Seltenen Erden dotiertem Orthosilikat unter Argon oder Stickstoff gezüchtet wird.

7. Vorrichtung zur Informationsspeicherung und -wiedergewinnung, umfassend als Speicherelement mit seltenen Erden dotierte Orthosilikate, ausgewählt aus Lu₂SiO₅, Y₂SiO₅ und Lu₂₋ₓYₓSiO₅, mit Ce oder Tb oder deren Kombination als primärem Seltenerd-Dotiermittel, und mit wenigstens einem sekundären Seltenerd-Dotiermittel, ausgewählt aus Pr, Nd, Sm, Eu, Gd, Dy, Ho, Er, Tm Yb, **dadurch gekennzeichnet, dass** die besagten, mit seltenen Erden dotierten Orthosilikate:
- eine Störstellendichte zwischen 10¹⁵ und 10²⁰ Störstellen/cm³ aufweisen,
- das besagte, primäre Seltenerd-Dotiermittel in einer Konzentration zwischen 700 ppm und 5000 ppm aufweisen,
- wobei die Gesamtkonzentration des sekundären Seltenerd-Dotiermittels oder der sekundären Seltenerd-Dotiermittel niedriger ist als die Konzentration des primären Seltenerd-Dotiermittels und zwischen 100 und 5000 ppm liegt.

8. Vorrichtung zur Informationsspeicherung und -wiedergewinnung nach Anspruch 7, wobei die besagte Vorrichtung ein optischer Speicher ist.

9. Vorrichtung zur Informationsspeicherung und -wiedergewinnung nach Anspruch 7, wobei die besagte Vorrichtung ein Herstellungssystem für elektronische Schaltkreise ist.

10. Vorrichtung zur Informationsspeicherung und -wiedergewinnung nach Anspruch 7, wobei die besagte Vorrichtung ein System zur Aufnahme von Röntgenbildern ist.

11. Vorrichtung zur Informationsspeicherung und -wiedergewinnung nach Anspruch 7, wobei die besagte Vorrichtung ein medizinisches System zur Aufnahme von Röntgenbildern ist.

12. Vorrichtung zur Informationsspeicherung und -wiedergewinnung nach Anspruch 7, wobei die besagte Vorrichtung ein Strahlendosimeter ist.

13. Vorrichtung zur Informationsspeicherung und -wiedergewinnung nach den Ansprüchen 7 bis 9, wobei die Information gespeichert wird mittels ionisierender Strahlung von poly- und/oder monochromatischen Quellen mit Energien zwischen 5 MeV und 3 eV.

14. Vorrichtung zur Informationsspeicherung und -wiedergewinnung nach einem der Ansprüche 7 bis 11, wobei die Information wiedergewonnen wird mittels optischer Anregungsverfahren unter Verwendung von Quellen mit Energien zwischen 2,5 und 1,5 eV.

15. Vorrichtung zur Informationsspeicherung und -wiedergewinnung nach einem der Ansprüche 7 bis 11, wobei die gespeicherte Information wiedergewonnen wird mittels thermaler Entregung.

## Revendications

1. Procédé de mémorisation et de récupération d'informations comprenant l'étape d'utilisation, en tant qu'élément de mémorisation, d'orthosilicates dopés aux terres rares, lesdits orthosilicates dopés aux terres rares étant sélectionnés parmi le Lu₂SiO₅, le Y₂SiO₅ et le Lu₂₋ₓYₓSiO₅, ayant en tant que dopant de terres rares principal le Ce ou le Tb ou leur combinaison et contenant au moins un dopant de terres rares secondaire sélectionné parmi le Pr, le Nd, le Sm, le Eu, le Gd, le Dy, le Ho, le Er, le Tm, le Yb, **caractérisé en ce que** lesdits orthosilicates dopés aux terres rares :
présentent une densité de pièges comprise entre 10¹⁵ et 10²⁰ pièges/cm³,
ont ledit dopant de terres rares principal avec une concentration comprise entre 700 ppm et 5000 ppm,
la concentration globale du dopant ou des dopants de terres rares secondaires est inférieure à la concentration du dopant de terres rares principal et est comprise entre 100 et 5000 ppm.

2. Procédé selon la revendication 1, dans lequel la densité de pièges est entre 10¹⁶ et 10¹⁹ pièges/cm³.

3. Procédé selon la revendication 1, dans lequel la densité de pièges est entre 2·10¹⁸ et 9·10¹⁸ pièges/cm³.

4. Procédé selon la revendication 1, dans lequel ladite concentration de dopant de terres rares principal est comprise entre 3500 et 4500 ppm.

5. Procédé selon la revendication 1, dans lequel ledit cristal d'orthosilicate dopé aux terres rares est développé dans une atmosphère de réduction.

6. Procédé selon la revendication 5, dans lequel ledit orthosilicate dopé aux terres rares est développé dans l'argon ou l'azote.

7. Dispositif pour la mémorisation et la récupération d'informations comprenant en tant qu'élément de mémorisation des orthosilicates dopés aux terres rares sélectionnés parmi le Lu₂SiO₅, le Y₂SiO₅ et le Lu₂₋ₓYₓSiO₅, ayant en tant que dopant de terres rares principal le Ce ou le Tb ou leur combinaison et contenant au moins un dopant de terres rares secondaire sélectionné parmi le Pr, le Nd, le Sm, le Eu, le Gd, le Dy, le Ho, le Er, le Tm, le Yb, **caractérisé en ce que** lesdits orthosilicates dopés aux terres rares :
présentent une densité de pièges comprise entre 10¹⁵ et 10²⁰ pièges/cm³,
ont ledit dopant de terres rares principal avec une concentration comprise entre 700 ppm et 5000 ppm,
la concentration globale du dopant ou des dopants de terres rares secondaires est inférieure à la concentration du dopant de terres rares principal et est comprise entre 100 et 5000 ppm.

8. Dispositif de mémorisation et de récupération d'informations selon la revendication 7, dans lequel ledit dispositif est une mémoire optique.

9. Dispositif de mémorisation et de récupération d'informations selon la revendication 7, dans lequel ledit dispositif est un système de fabrication de circuit électronique.

10. Dispositif de mémorisation et de récupération d'informations selon la revendication 7, dans lequel ledit dispositif est un système d'imagerie radiographique.

11. Dispositif de mémorisation et de récupération d'informations selon la revendication 7, dans lequel ledit dispositif est un système d'imagerie radiographique médicale.

12. Dispositif de mémorisation et de récupération d'informations selon la revendication 7, dans lequel ledit dispositif est un dosimètre de rayonnement.

13. Dispositif de mémorisation et de récupération d'informations selon les revendications 7 à 9, dans lequel les informations sont mémorisées au moyen d'un rayonnement ionisant de sources polychromatique et/ou monochromatique avec des énergies comprises entre 5 Mev et 3 eV.

14. Dispositif de mémorisation et de récupération d'informations selon l'une des revendications 7 à 11, dans lequel les informations mémorisées sont récupérées au moyen de procédés d'excitation optique avec des sources ayant des énergies comprises entre 2,5 et 1,5 eV.

15. Dispositif de mémorisation et de récupération d'informations selon l'une des revendications 7 à 11, dans lequel les informations mémorisées sont récupérées au moyen d'une désexcitation thermique.
